# EUROPÄISCHE PATENTSCHRIFT

(11) **EP 3 481 605 B1**
(45) Veröffentlichungstag und Bekanntmachung des Hinweises auf die Patenterteilung: **22.01.2020**
(21) Anmeldenummer: 18779239.5
(22) Anmeldetag: 13.09.2018
(51) Int. Cl.: B25J 15/04

(54) **VERFAHREN UND SYSTEM ZUM AUTOMATISCHEN WECHSELN VON WELLEN**
METHOD AND SYSTEM FOR AUTOMATICALLY CHANGING SHAFTS
PROCÉDÉ ET SYSTÈME DE CHANGEMENT AUTOMATIQUE D'ARBRES

(30) Priorität: 13.09.2017 DE 102017121171
(43) Veröffentlichungstag der Anmeldung: 15.05.2019
(73) Patentinhaber: Ferrobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner Patentanwälte mbB
(86) Internationale Anmeldenummer: PCT/EP2018/074799
(87) Internationale Veröffentlichungsnummer: WO 2019/053155

(56) Entgegenhaltungen:
- EP-A1- 0 525 699
- WO-A1-93/17838
- US-A- 4 897 014
- US-A- 5 002 500

## Beschreibung

### TECHNISCHES GEBIET

Die vorliegende Erfindung betrifft ein Verfahren und ein System zum automatischen, robotergestützten Wechseln von Wellen. An den zu wechselnden Wellen können beispielsweise Schleifscheiben für eine robotergestützte Schleifvorrichtung oder auch andere rotierbare Werkzeuge montiert sein.

### HINTERGRUND

Bei robotergestützten Schleifvorrichtungen wird ein Schleifwerkzeug (z.B. eine elektrisch betriebene Schleifmaschine mit rotierender Schleifscheibe) von einem Manipulator, beispielsweise einem Industrieroboter, geführt. Dabei kann das Schleifwerkzeug auf unterschiedliche Weise mit dem sogenannten TCP (*Tool Center Point*) des Manipulators gekoppelt sein, sodass der Manipulator Position und Orientierung des Werkzeugs praktisch beliebig einstellen kann. Industrieroboter sind üblicherweise positionsgeregelt, was eine präzise Bewegung des TCP entlang einer gewünschten Trajektorie ermöglicht. Um beim robotergestützten Schleifen ein gutes Ergebnis zu erzielen ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als dass ein Regler (*closed-loop controller*) rasch genug auf Schwankungen der Prozesskraft reagieren könnte. Um dieses Problem zu lösen, kann zwischen TCP des Manipulators und dem Schleifwerkzeug ein im Vergleich zum Industrieroboter (vergleichsweise kleiner) Linearaktor angeordnet sein, der den TCP des Manipulators mit dem Schleifwerkzeug koppelt. Der Linearaktor regelt während des Schleifens lediglich die Prozesskraft (also die Anpresskraft zwischen Werkzeug und Werkstück) während der Manipulator das Schleifwerkzeug samt Linearaktor positionsgeregelt entlang einer vorgebbaren Trajektorie bewegt. Die Druckschrift US 5,002,500 offenbart einen elektrischen Steckverbinder für eine Schweißmaschine mit einem ersten und einem zweiten Kontaktblock, wobei beide Kontaktblöcke korrespondierende konische Abschnitte aufweisen. Die Druckschriften US 4,897,014, WO 93/17838 und EP 0 525 699 A1 offenbaren Systeme zum Wechseln von Werkstücken.

Auch bei robotergestützten Schleifvorrichtungen werden verschlissene Schleifscheiben häufig noch manuell gewechselt. Obwohl einige Konzepte für robotergestützte Wechselstationen zum Wechseln von Schleifscheiben existieren, sind bekannte Lösungen vergleichsweise komplex, aufwändig zu realisieren und daher teuer.

Die Erfinder haben sich die Aufgabe gestellt, ein System und ein Verfahren zur Verfügung zu stellen, das aus einfache Weise ein automatisches, robotergestütztes Wechseln von rotierenden Werkzeugen wie z.B. Schleifscheiben ermöglicht.

### ZUSAMMENFASSUNG

Die oben genannte Aufgabe wird durch die Vorrichtung gemäß Anspruch 1 gelöst. Unterschiedliche Ausführungsformen und Weiterentwicklungen sind Gegenstand der abhängigen Ansprüche.

Es wird hier ein System für die robotergestützte Bearbeitung von Werkstücken beschrieben. Gemäß einem Ausführungsbeispiel weist das System eine Werkzeugmaschine mit einer Motorwelle zum Antrieb eines Werkzeugs, einen Linearaktor zum Koppeln der Werkzeugmaschine mit einem Manipulator sowie eine Wellenkupplung zum Koppeln der Motorwelle der Werkzeugmaschine mit dem Werkzeug auf. Ein erster Kupplungsteil der Wellenkupplung weist einer Welle und einem konischen Wellenabschnitt auf, wobei an einem ersten Ende der Welle das Werkzeug fixierbar ist und an einem zweiten Ende der Welle eine Wellenschulter angeordnet ist. Ein zweiter Kupplungsteil der Wellenkupplung ist mit der Motorwelle der Werkzeugmaschine starr verbunden ist und weist eine konische Nabe auf, in die der konische Wellenabschnitt (des ersten Kupplungsteils) zur Bildung eines Kegelsitzes einführbar ist. Der zweite Kupplungsteil weist weiter ein quer zu einer Rotationsachse der Wellenkupplung verschiebbares Sicherungselement auf, welches so angeordnet ist, dass es an der Wellenschulter der Welle einrasten kann. Die Wellenkupplung beinhaltet mindestens eine Feder, die so angeordnet ist, dass sie eine Federkraft erzeugt, welche bei eingerastetem Sicherungselement in axialer Richtung auf den Kegelsitz wirkt und diesen vorspannt.

Es wird im Folgenden eine Wellenkupplung beschrieben. Gemäß einem Ausführungsbeispiel umfasst die Wellenkupplung einen ersten Kupplungsteil mit einer Welle und einem konischen Wellenabschnitt. An einem ersten Ende der Welle ist ein Werkzeug (z.B. eine Schleifscheibe, ein Bohrer, etc.) fixierbar, und an einem zweiten Ende der Welle ist eine Wellenschulter angeordnet. Die Wellenkupplung umfasst des Weiteren einen zweiten Kupplungsteil, der eine konische Nabe aufweist, in die der konische Wellenabschnitt des ersten Kupplungsteils zur Bildung eines Kegelsitzes einführbar ist. Der zweite Kupplungsteil weist des Weiteren ein quer zu einer Rotationsachse der Wellenkupplung verschiebbares Sicherungselement aufweist, das so angeordnet ist, dass es an der Wellenschulter der Welle einrasten kann. Mindestens eine Feder ist so in der Wellenkupplung angeordnet, dass sie eine Federkraft erzeugt, welche bei eingerastetem Sicherungselement in axialer Richtung auf den Kegelsitz wirkt und diesen vorspannt.

Ein weiteres Ausführungsbeispiel betrifft ein Verfahren, gemäß dem mittels eines Manipulators zunächst ein zweites Kupplungsteils einer Wellenkupplung, der eine konische Nabe aufweist, koaxial zu einem ersten Kupplungsteil der Wellenkupplung ausgerichtet wird, der einen konischen Wellenabschnitt aufweist und in einer Wechselstation bereit liegt. Anschließend wird das zweite Kupplungsteil auf den ersten Kupplungsteil gedrückt, bis ein Sicherungselement des zweiten Kupplungsteils an einer Wellenschulter des ersten Kupplungsteils einrastet und eine Rastverbindung bildet. Nach dem Einkuppeln kann durch das Anheben des zweiten Kupplungsteils auch der erste Kupplungsteil aus der Wechselstation gehoben werden. Mittels des an dem ersten Kupplungsteil montierten Werkzeugs kann mit Hilfe des Manipulators automatisiert ein (Bearbeitungs-) Prozess an einem Werkstück durchgeführt werden. Im Anschluss wird die Wellenkupplung in die Wechselstation (oder eine andere Wechselstation) derart eingelegt, dass über einen Anschlag in der jeweiligen Wechselstation das Sicherungselement des zweiten Kupplungsteils betätigt werden kann, wodurch die Rastverbindung gelöst wird. Nach dem Auskuppeln wird das zweite Kupplungsteil aus der jeweiligen Wechselstation mittels des Manipulators entfernt, während der erste Kupplungsteil in der Wechselstation verbleibt.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt schematisch ein Beispiel einer robotergestützten Schleifvorrichtung, bei der eine Schleifmaschine mittels eines Manipulators positioniert wird.
Figur 2 zeigt schematisch die Schleifmaschine, eine Halterung zur Montage der Schleifmaschine an dem Manipulator und eine Wellenkupplung, die die Schleifscheibe mit der Welle der Schleifmaschine koppelt.
Figuren 3 zeigt eine exemplarische Implementierung einer Wellenkupplung aus dem Beispiel aus Fig. 2 in einem ausgekuppelten Zustand.
Figuren 4-7 zeigen die Wellenkupplung gemäß Fig. 3 in unterschiedlichen Positionen während des Einkuppelns.
Figur 8 zeigt ein Sicherungselement der Wellenkupplung aus Fig. 3 in einer Draufsicht.
Figur 9 zeigt eine weitere exemplarische Implementierung der Wellen aus dem Beispiel aus Fig. 2 in einem eingekuppelten Zustand.
Figur 10 zeigt ein Beispiel einer Wechselstation, mit der ein Roboter ein Werkzeug wechseln kann, das mit der Maschine über eine der hier beschriebenen Wellenkupplungen verbunden ist.
Figur 11 zeigt ein Detail der Wechselstation aus Fig. 10 mit der Wellenkupplung.
Figur 12 ist ein Flussdiagramm, das den Ablauf eines Wellenwechselvorganges darstellt.

### DETAILLIERTE BESCHREIBUNG

Ausführungsbeispiele der Erfindung werden anhand einer robotergestützten Schleifvorrichtung beschrieben. Die Beschreibung ist jedoch nicht auf robotergestütztes Schleifen beschränkt. Die hier beschriebenen Ausführungsbeispiele betreffen allgemein eine Wellenkupplung und ein System zum Wechseln von Wellen, an denen ein beliebiges rotierendes Werkzeug montiert sein kann wie z.B. eine Schleifscheibe, eine Polierscheibe ein Bohrer, ein Fräser, ein Schraubendreher, etc. Die in dieser Beschreibung erwähnte Schleifmaschine steht exemplarisch für eine beliebige Werkzeugmaschine, und die Schleifscheibe steht exemplarisch für ein beliebiges von der Werkzeugmaschine angetriebenes rotierendes Werkzeug.

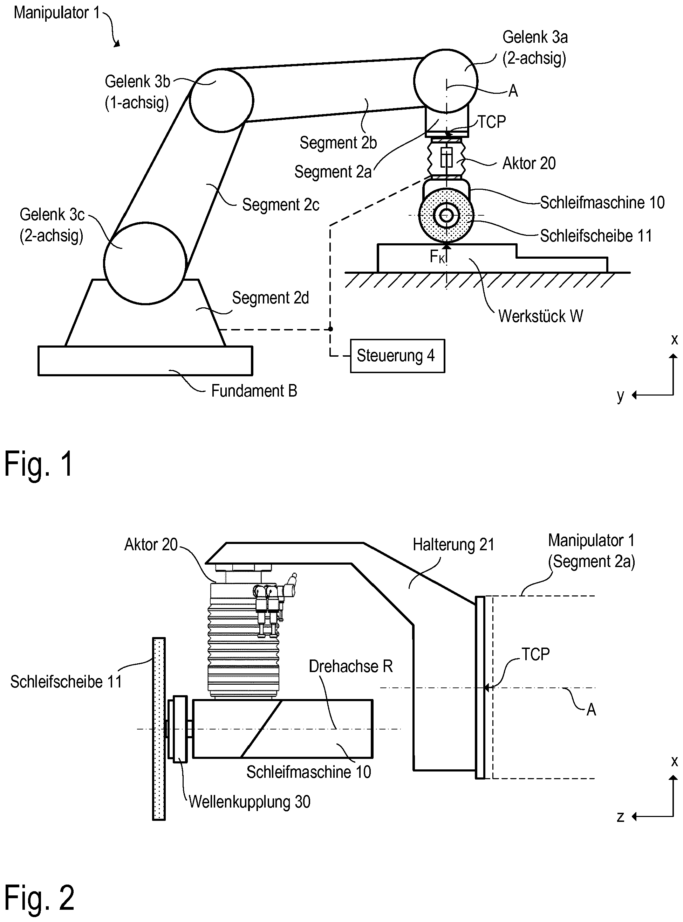

Bevor verschiedene Ausführungsbeispiele im Detail erläutert werden, wird zunächst ein allgemeines Beispiel einer robotergestützten Schleifvorrichtung beschrieben. Diese umfasst einen Manipulator 1 (beispielsweise einen Industrieroboter) und eine Schleifmaschine 10 mit rotierender Schleifscheibe 11, wobei die Schleifmaschine 10 mit dem *Tool-Center-Point* (TCP) des Manipulators 1 über einen Linearaktor 20 gekoppelt ist. Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das letzte Segment 2d ist dabei meist starr mit einem Fundament B verbunden (was jedoch nicht zwangsläufig der Fall sein muss). Das Gelenk 3c verbindet die Segmente 2d und 2c. Das Gelenk 3c kann zweiachsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann zweiachsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert. Der TCP kann (in bestimmten Grenzen) beliebig positioniert werden (mit beliebiger Orientierung der Achse A).

Der Manipulator 1 ist üblicherweise positionsgeregelt, d.h. die Robotersteuerung kann die Pose (Position und Orientierung) des TCP festlegen und diesen entlang einer vordefinierten Trajektorie bewegen. Industrieroboter und die Positionsregelung des TCP ist an sich bekannt und wird daher hier nicht weiter erläutert. Wenn der Aktor 20 an einem Endanschlag anliegt, ist mit der Pose des TCP auch die Pose des Schleifwerkzeugs definiert. Wie eingangs bereits erwähnt, dient der Aktor 20 dazu, während des Schleifprozesses die Kontaktkraft (Prozesskraft) zwischen Werkzeug (Schleifscheibe 11) und Werkstück W auf einen gewünschten Wert einzustellen. Eine direkte Regelung der Prozesskraft durch den Manipulator 1 ist für Schleifanwendungen üblicherweise zu ungenau, da durch die hohe Massenträgheit der Segmente 2a-2c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung dazu ausgebildet, die Pose (Position und Orientierung) des TCP zu regeln, während die Regelung der Kontaktkraft (siehe auch Fig. 2, Kontaktkraft F_{K}) ausschließlich vom Aktor 20 bewerkstelligt werden kann (jedoch nicht zwingend muss), der zwischen Schleifmaschine 10 und Manipulator 1 gekoppelt ist.

Wie bereits erwähnt kann während des Schleifprozesses die Kontaktkraft F_{K} zwischen Werkzeug (Schleifscheibe 11) und Werkstück W mit Hilfe des (Linear-) Aktors 20 und einer Kraftregeleinheit (die beispielsweise in der Steuerung 4 implementiert sein kann) so eingestellt werden, dass die Kontaktkraft F_{K} zwischen Schleifwerkzeug und Werkstück W einem vorgebbaren Sollwert entspricht. Die Kontaktkraft ist dabei eine Reaktion auf die Aktorkraft F_{A}, mit der der Linearaktor 20 auf die Werkstückoberfläche drückt. Bei fehlendem Kontakt zwischen Werkstück 40 und Werkzeug fährt der Aktor 20 aufgrund der fehlenden Kontaktkraft F_{K} gegen einen Endanschlag (in Fig. 1 nicht dargestellt oder in den Aktor 20 integriert). Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft während des Schleifprozesses und zur Erkennung von Kontakt zwischen Werkzeug (Schleifmaschine 10 mit Schleifscheibe 11) und Werkstück W. Ein Kontakt kann z.B. erkannt werden, wenn die Auslenkung des Aktors 20 ausgehend vom Endanschlag keiner wird, oder die Änderung des Auslenkung des Aktors 20 negativ wird.

Der Aktor kann ein pneumatischer Aktor sein und beispielsweise einen doppeltwirkenden Pneumatikzylinder aufweisen. Jedoch sind auch andere pneumatische Aktoren anwendbar wie z.B. Balgzylinder und Luftmuskel. Als Alternative kommen auch elektrische Direktantriebe (getriebelos) in Betracht. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben. In manchen Anwendung wird der Aktor 20 nicht benötigt und kann weg gelassen werden. In diesem Fall kann der Roboter/Manipulator 1 die Prozesskraft direkt regeln. Manche Anwendungen kommen auch ohne Kraftregelung aus und der Roboter/Manipulator 1 arbeitet positionsgeregelt. Für die hier beschriebene Wellenkupplung und das Wellenwechselsystem ist die Kraft- und Positionsregelung an sich nicht weiter relevant, sie kann jedoch für den mit dem Werkzeug durchgeführten (Bearbeitungs-) Prozess nützlich sein.

In dem in Fig. 2 dargestellten Beispiel ist zwischen Aktor 20 und dem äußersten Segment 2a des Manipulators 1 (siehe auch Fig. 1) eine Halterung 21 angeordnet, die annähernd eine L-Form aufweist. Die Halterung 21 hat den Zweck, dass der Linearaktor 20 nicht koaxial zur Achse A des Segment 2a am Manipulators 1 montiert werden muss (wie in Fig. 1 dargestellt), sondern um einen Winkel von z.B. 90° verkippt werden kann, sodass die Drehachse R der Schleifmaschine im Wesentlichen parallel zur Achse A liegt. Je nach Anwendung und spezifischer Ausgestaltung der Roboterzelle kann die Halterung auch weggelassen werden (Aktor 20 ist dann direkt am Manipulator 1 montiert) oder eine Halterung verwendet werden, die einen anderen Winkel als 90° aufweist. In den Fig. 1 und 2 ist auch die Lage des lokalen Koordinatensystems der Schleifmaschine eingezeichnet. In diesem Koordinatensystem ist die Drehachse R der Schleifmaschine gleich der z-Achse, und der Linearaktor 20 wirkt entlang der x-Achse.

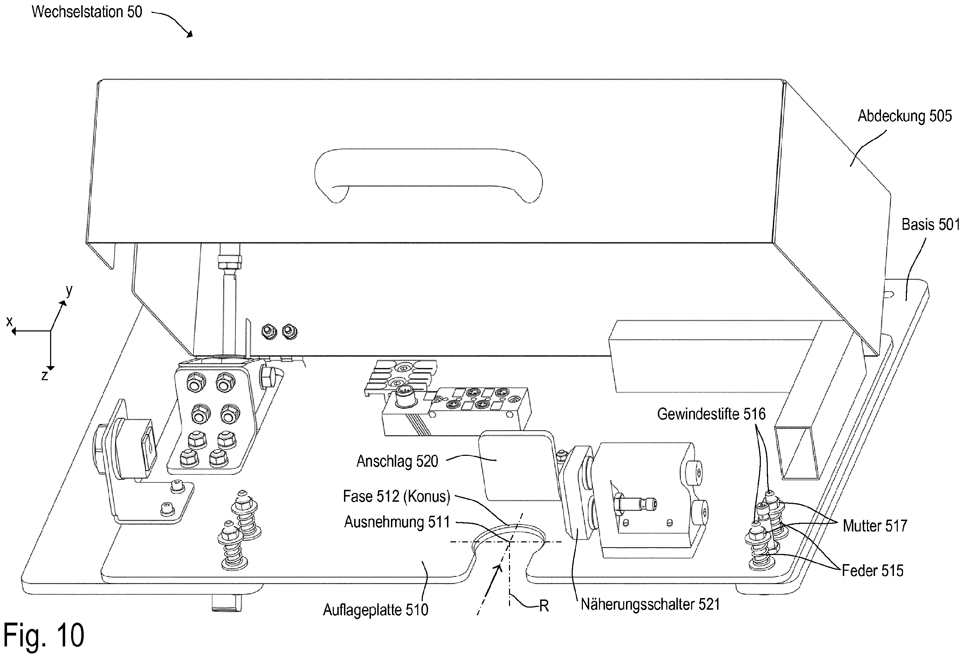

Das Werkzeug (z.B. die Schleifscheibe 11) kann mit dem Antrieb (z.B. Motor der Schleifmaschine 10) über eine Wellenkupplung 30 verbunden sein. In diesem Fall ist das Werkzeug mit einem ersten Kupplungsteil der Wellenkupplung 30 und die Antriebswelle des Motors mit einem zweiten Kupplungsteil der Wellenkupplung 30 verbunden. Der erste Kupplungsteil kann als spezieller Wellenstummel betrachtet werden, an dem das Werkzeug (die Schleifscheibe 11) montiert ist. Mit Hilfe einer speziellen Wechselstation (siehe z.B. Fig. 10) kann ein Roboter automatisch das Werkzeug wechseln, wobei die Baugruppe bestehend aus Werkzeug und dem ersten Kupplungsteil immer zusammen gewechselt wird.

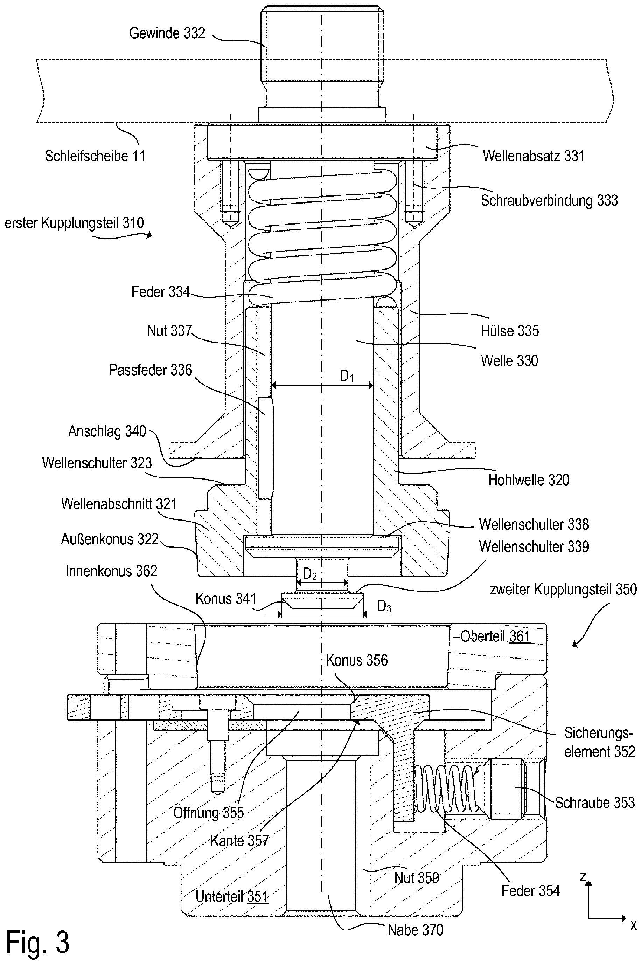

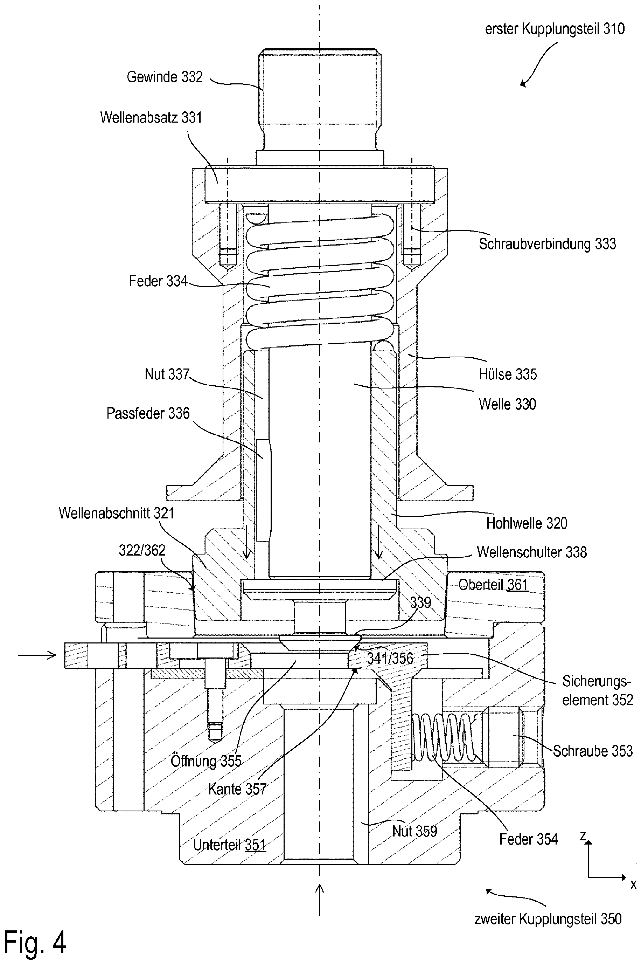

Fig. 3 zeigt eine exemplarische Implementierung einer Wellenkupplung 30 (in einem ausgekuppelten Zustand), welche für ein automatisches, robotergestütztes Wechseln von Schleifscheiben verwendet werden kann. Die Wellenkupplung weist einen ersten Kupplungsteil 310 und einen zweiten Kupplungsteil 350 auf. Der erste Kupplungsteil 310 ist im Betrieb mit einer Schleifscheibe 11 verbunden, beispielsweise mittels einer Schraubverbindung. In dem dargestellten Beispiel wird eine Schleifscheibe 11 auf ein Ende einer Welle 330 aufgesteckt und wird mittels einer Mutter (nicht dargestellt), die auf ein am Wellenende vorgesehenes Gewinde 332 aufgeschraubt wird, fixiert, sodass die Schleifscheibe 11 zwischen Mutter und einem Wellenabsatz 331 der Welle 330 geklemmt wird. Der zweite Kupplungsteil 350 weist eine Nabe 370 auf, in der die Antriebswelle der Schleifmaschine 10 (in Fig. 3 nicht dargestellt) eingeführt und über eine in die Nut 359 eingesetzte Passfeder auf herkömmliche Weise befestigt werden kann. Die beiden Kupplungsteile 310 und 350 können mittels eines Kegelsitzes (Außenkonus 322 am ersten Kupplungsteil 310 und Innenkonus 362 am zweiten Kupplungsteilt 350) verbunden werden. Wie die beiden Kupplungsteile 310 und 350 ineinandergreifen und aneinander fixiert werden können, wird weiter unten unter Bezugnahme auf Fig. 4-7 noch näher erläutert. Zunächst wird auf den Aufbau des ersten Kupplungsteils 310 genauer eingegangen.

Der erste Kupplungsteil kann als eine Art Teleskopwelle gesehen werden, die unter anderem aus der Welle 330 (an der die Schleifscheibe 11 fixiert ist) und einer Hohlwelle 320 aufgebaut ist, wobei Welle 330 und Hohlwelle 320 axial zueinander verschiebbar sind (entlang der Drehachse R). Die Hohlwelle 320 ist dabei relativ zur Welle 330 zwischen zwei Endpositionen verschiebbar. Koaxial zur Welle 330 ist eine Hülse 335 angeordnet, wobei Hülse 335 und Welle 330 starr miteinander verbunden sind, beispielsweise über eine Schraubverbindung 333, die einen Wellenabschnitt 331 der Welle 330 mit der Hülse 335 verbindet. Außen- und Innendurchmesser der Hohlwelle 320 sind so dimensioniert, dass die Hohlwelle 320 zwischen Welle 330 und Hülse 320 (in axialer Richtung) gleiten kann. Der Innendurchmesser der Hülse 335 und der Außendurchmesser der Hohlwelle 320 können eine Spielpassung bilden (*clearance fit*). Gleichermaßen können Innendurchmesser der Hohlwelle 320 und der Außendurchmesser D₁ der Welle 330 ebenso eine Spielpassung bilden. Eine Passfeder 336, welche in eine Nut 337 der Welle 330 eingesetzt ist, verhindert eine Verdrehung zwischen Hohlwelle 320 und Welle 330.

Wie erwähnt ist die Hohlwelle 320 relativ zur Welle 330 verschiebbar, wobei eine erste Endposition der Hohlwelle 320 von einer Wellenschulter 338 der Welle 330 und eine zweite Endposition der Hohlwelle 320 von einer Stirnseite der Hülse 335, die als Anschlag 340 dient, gebildet wird. In der zweiten Endposition ist die Hohlwelle 320 so weit wie möglich in die Hülse 335 eingeführt, und eine Wellenschulter 323 der Hohlwelle 320 liegt am Anschlag 340 an. In der ersten Endposition ragt die Hohlwelle 320 maximal aus der Hülse 335 heraus und ein Wellenabsatz im Inneren der Hohlwelle liegt an einer Wellenschulter 338 der Welle 330 an. In der Hülse 335 ist eine Feder 334 so angeordnet, dass die Federkraft die Hohlwelle 320 aus der Hülse 335 herausdrückt und in axialer Richtung gegen die Wellenschulter 338 drückt.

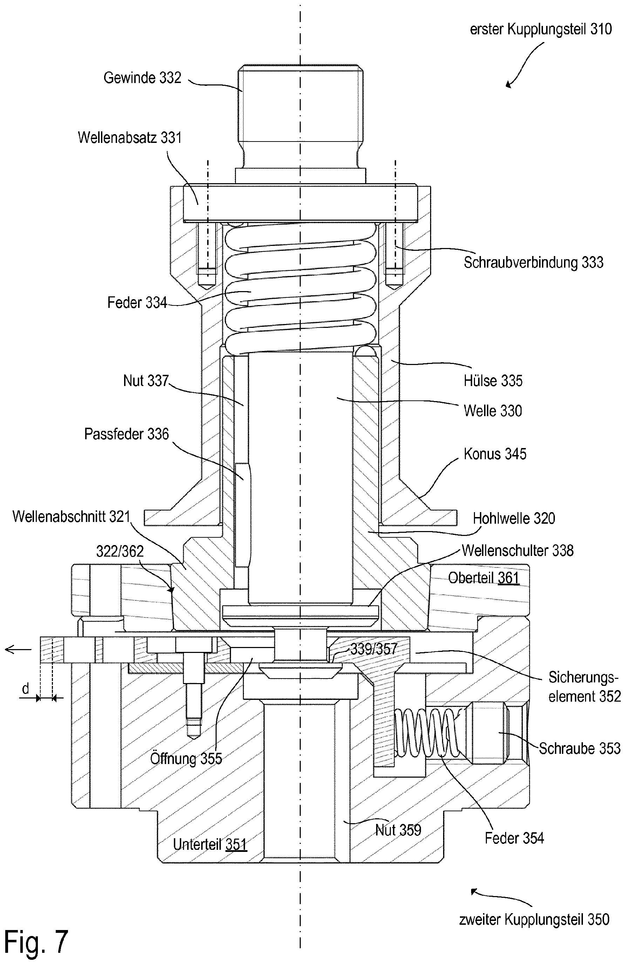

Ein Wellenabschnitt am unteren Ende der Welle 330 hat einen Durchmesser D₂, der etwas kleiner sein kann als der Durchmesser D₁. An der unteren Stirnseite der Welle 330 ist ein Konus 341 vorgesehen, der einen maximalen Durchmesser D₃ aufweist, der größer ist, als der Durchmesser D₂, sodass an der Rückseite des Konus 341 eine Wellenschulter 339 gebildet wird. Diese Wellenschulter 339 dient zur axialen Fixierung des ersten Kupplungsteils 310 an dem zweiten Kupplungsteil 350 (vgl. z.B. Fig. 7) Der Konus 341 entsteht z.B. durch Anfasen der umlaufenden Kante an einem Ende der Welle 330. Die Fase bildet den erwähten Konus 341.

Der zweite Kupplungsteil 350 kann ein zweiteiliges Gehäuse aufweisen (Oberteil 361, Unterteil 351), die beispielsweise fest aneinander fixiert (z.B. mittels Schrauben) sein können. Der Oberteil 361 des Gehäuses weist einen zentralen Innenkonus 362 (d.h. eine konische Nabe), der zusammen mit dem korrespondierenden Außenkonus 322 (an der Hohlwelle 320) des ersten Kupplungsteils 310 einen Kegelsitz bilden kann (siehe z.B. Fig. 7). Der Innenkonus 362 verläuft durch den gesamten Oberteil 361 hindurch und ist rotationssymmetrisch in Bezug auf die Drehachse R. An dem Unterteil 351 des Gehäuses ist ein radial (quer zur Drehachse R und relativ zum Gehäuse des zweiten Kupplungsteils 350) verschiebbares Sicherungselement 352 angeordnet, das mittels einer Feder 354 gegen einen Endanschlag im Unterteil 351 des Gehäuses gedrückt wird. In dem dargestellten Beispiel ist die Feder 354 in einer radialen Bohrung im Unterteil 351 des Gehäuses angeordnet, die mit einer Schraube 353 verschlossen ist. Die Federkraft der Feder 354 wirkt also zwischen Sicherungselement 352 und Schraube 353.

Das Unterteil 351 des Gehäuses weist ein zentrales Loch auf, das eine Nabe 370 für eine Motorwelle der Schleifmaschine 10 bildet (vgl. Fig. 2). Die Nabe 370 kann eine Nut 359 zur Aufnahme einer Passfeder (nicht dargestellt) bilden. Alternative zu der Passfeder kann eine beliebige andere Welle-Nabe-Verbindung zur Montage des zweiten Kupplungsteils 350 an der Motorwelle der Schleifmaschine 10 verwendet werden.

Das Sicherungselement weist unterhalb der konischen Nabe (Innenkonus 362) eine zentrale Öffnung 355 auf, durch die die Drehachse R hindurchverläuft. Die obere Kante der Öffnung 355 ist angefast, sodass die Fase einen kleinen Innenkonus 356 bildet. Die untere Kante 357 der Öffnung 355 liegt im eingekuppelten Zustand an der Wellenschulter 339 der Welle 330 des ersten Kupplungsteils 310 an, um die beiden Kupplungsteile 310, 350 aneinander zu fixieren (vgl. z.B. Fig. 7). Die zentrale Öffnung 355 in dem Sicherungselement 352 ist in der Darstellung gemäß Fig. 3 leicht exzentrisch in Bezug auf die Drehachse R.

In den Fig. 4 bis 6 sind die beiden Kupplungsteile 310 und 350 der Wellenkupplung aus Fig. 3 in mehreren (Zwischen-) Positionen während eines Einkuppelvorganges dargestellt. In einem Beispiel liegt zum Einkuppeln der erste Kupplungsteil 310 samt einer daran montierten Schleifscheibe 11 auf einer Grundplatte (vgl. z.B. Fig. 10), und der zweite Kupplungsteil 350 wird vom Roboter von oben auf den ersten Kupplungsteil 310 gedrückt (in diesem Fall ist die Lage der Wellenkupplung genau umgekehrt (*upside down*) wie in Fig. 3 dargestellt). Alternativ kann der erste Kupplungsteil 310 samt einer daran montierten Schleifscheibe 11 auch hängend an einer Grundplatte angeordnet sein, und ein und der zweite Kupplungsteil 350 wird vom Roboter von unten auf den ersten Kupplungsteil 310 gedrückt (in diesem Fall ist die Lage der Wellenkupplung genauso wie in Fig. 3 dargestellt). Auch eine schräge Lage der Wellenkupplung beim Ein- und Auskuppeln ist möglich.

Fig. 4 repräsentiert einen Zustand, in dem der zweiten Kupplungsteil 350 entlang der Drehachse R (in z-Richtung) bereits teilweise auf den ersten Kupplungsteil 310 aufgesteckt ist. Dabei wird der konische Wellenanschnitt 321 (Außenkonus 322) der Hohlwelle 320 des ersten Kupplungsteils 310 in die konische Öffnung (Innenkonus 362) des Oberteils 361 des Gehäuses des zweiten Kupplungsteils 350 eingeführt. Dabei berührt ab einer bestimmten Einführtiefe das angefaste Ende (Konus 341) der Welle 330 des ersten Kupplungsteils 310 die (z.B. abgeschrägte, angefaste) Kante (Innenkonus 356) der zentralen Öffnung 355 des Sicherungselementes 352. Die Fasen 341, 456 können aufeinander gleiten während das Sicherungselement 352 quer zur Rotationsachse verschoben wird.

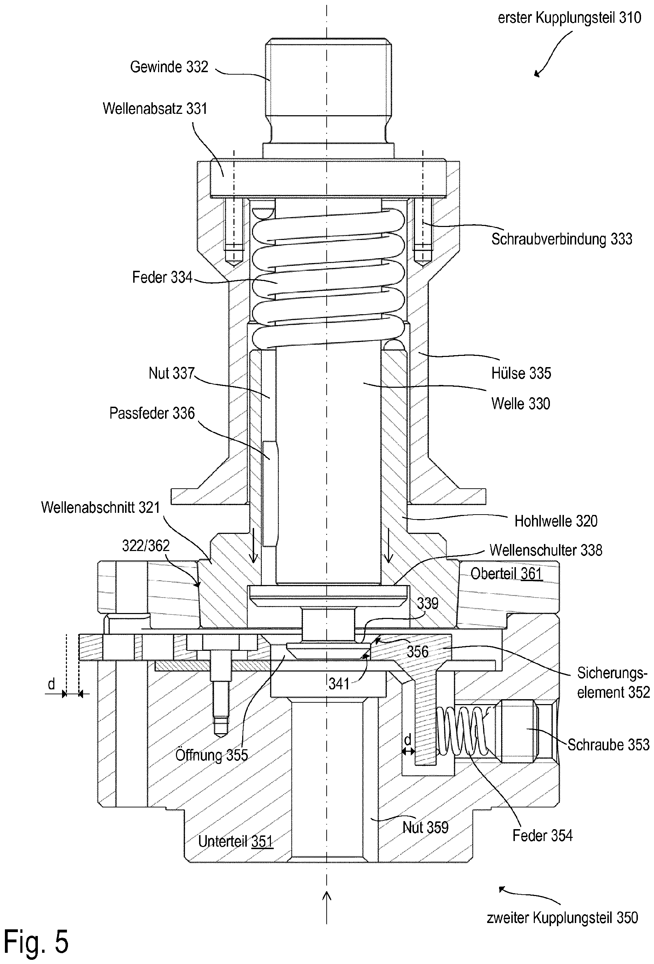

Fig. 5 repräsentiert einen Zustand, in dem der zweiten Kupplungsteil 350 entlang der Drehachse R (in z-Richtung) vollständig auf den ersten Kupplungsteil 310 aufgesteckt ist. Dabei bilden der konische Wellenanschnitt 321 (Außenkonus 322) der Hohlwelle 320 des ersten Kupplungsteils 310 und die konische Nabe (Innenkonus 362) des Oberteils 361 des Gehäuses des zweiten Kupplungsteils 350 einen Kegelsitz (in Fig. 5 beschriftet mit 322/362). Durch das (vollständige) Einführen des ersten Kupplungsteils 310 in den zweiten Kupplungsteil 350 wird das Sicherungselement 352 vom abgeschrägten Endstück (Konus 341) der Welle 330 zur Seite geschoben. In der in Fig. 5 dargestellten Situation ist das Sicherungselement 352 im Vergleich zu der in Fig. 4 dargestellten Situation um eine Verschiebung d nach rechts (in Richtung der x-Achse) verschoben. Dieses Verschieben des Sicherungselementes 352 wird dadurch unterstützt, dass der Außenkonus 341 (bzw. die Fase) am Endstück der Welle 330 und der Innenkonus 356 am Rand der Öffnung 355 im Sicherungselement 352 aufeinander abgestimmt sind, wodurch die konischen Flächen besser aufeinander gleiten können. Es sei jedoch angemerkt, dass statt der konischen Form auch eine andere schräge oder gewölbte Form möglich ist. Es ist auch ausreichend, wenn nur einer der beiden Teile (Welle 330, Sicherungselement 352) an der Kontaktstelle konisch, schräg oder gewölbt ist.

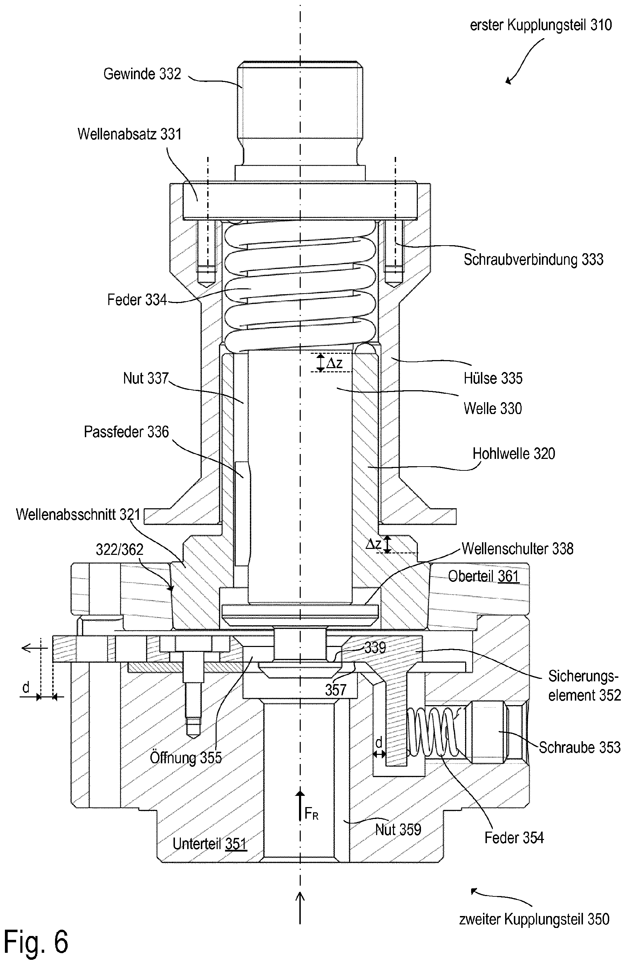

In der in Fig. 5 dargestellten Situation drückt die Feder 334 die Wellenschulter 338 der Welle 330 noch an einen Absatz der Hohlwelle 320. Um die Welle 330 so weit in den zweiten Kupplungsteil hinein zu schieben, dass das Sicherungselement an der Wellenschulter 339 der Welle 330 einrasten kann, muss die Feder 334 komprimiert werden. Im Vergleich zu der in Fig. 5 dargestellten Situation ist die Feder 334 in Fig. 6 um einen Verschiebeweg Δz komprimiert, wodurch die Welle 330 um eine Distanz Δz weiter in den zweiten Kupplungsteil 350 hinein ragt und die untere Kante 357 des Sicherungselementes 352 an der Wellenschulter 339 der Welle 330 einrastet, wenn das Sicherungselement 352 von der Feder 354 in die ursprüngliche Stellung zurückgedrückt wird. Fig. 6 zeigt die Situation unmittelbar vor dem Einrasten des Sicherungselementes 352 und Figur 7 die Situation unmittelbar nach dem Einrasten des Sicherungselementes 352. Die Kraft F_{R} für das Komprimieren der Feder wird von dem Manipulator (siehe Fig. 1) aufgebracht, wobei die Kraft F_{R} gleich k_{F}. Δz gilt, wobei k_{F} die Federkonstante der Feder 334 repräsentiert.

Nachdem das Sicherungselement 352 an der Wellenschulter 339 der Welle 330 eingerastet ist, sind die die beiden Kupplungsteile 310, 350 reibschlüssig über den Kegelsitz 322/362 verbunden. Der Kegelsitz ist in axialer Richtung (z-Richtung) mit der Federkraft k_{F}·Δz vorgespannt. Zum Lösen der Verbindung der beiden Kupplungsteile 310, 350 muss (mit Hilfe des Manipulators, siehe Fig. 1) lediglich das Sicherungselement 352 gegen die Kraft der Feder 354 soweit verschoben werden, bis das Sicherungselement 352 nicht mehr an der Wellenschulter 339 der Welle 330 einrastet und folglich die Feder 334 die Welle 330 in die Ausgangsposition (Wellenschulter 338 liegt an einem Absatz der Hohlwelle 320 an) zurückdrücken kann.

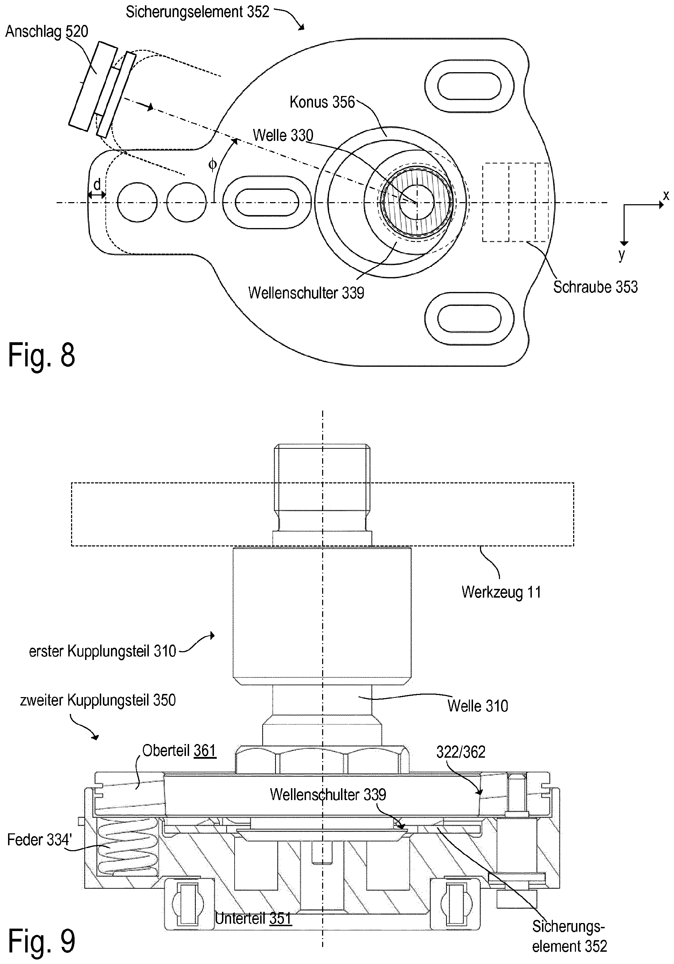

Figur 8 ist eine Detailansicht des Sicherungselementes 352 in eingerastetem Zustand an der Wellenschulter 339 der Welle 330. Dabei liegt die Kante 357 der Öffnung 355 des Sicherungselementes 352 an der Wellenschulter 339 an und sperrt dadurch ein zurückschnappen der Welle 330 aufgrund der Federkraft der Feder 334 (vgl. Fig. 7). Die in dem Sicherungselement 352 vorgesehenen Langlöcher dienen lediglich der Führung des Sicherungselementes quer zur Drehachse R (quer zur z-Richtung).

Um die Verbindung der beiden Kupplungsteile 310 und 350 wieder zu lösen kann der Manipulator das Schleifwerkzeug an eine definierte Ablageposition bewegen. In der Nähe und in definierter Lage relativ zu der Ablageposition ist ein Anschlag 520 angeordnet. Beispielsweise durch eine Drehung der Wellenkupplung um die Drehachse R der Welle 330 kann der Roboter die Wellenkupplung so positionieren, dass der Anschlag 520 das Sicherungselement 352 gegen die Kraft der Feder 354 (siehe Fig. 7, in Fig. 8 nicht gezeigt) in den zweiten Kupplungsteil 350 hineindrückt und die Rastverbindung zwischen Sicherungselement 352 und der Wellenschulter 339 der Welle 330 löst. Um kleinere Toleranzen auszugleichen, kann der Anschlag 520 ebenfalls federnd gelagert sein, wobei die Federsteifigkeit des Anschlages größer ist als die Federsteifigkeit der Feder 354. Sobald die Rastverbindung gelöst ist, schnappt die Welle 330 zurück in den ersten Kupplungsteil 310 und die Kegelsitzverbindung ist gelöst. Der Impuls der Welle 330 beim zurückschnappen reicht in der Regel aus, um den Kegelsitz zu lösen. Der Roboter kann daraufhin den zweiten Kupplungsteil 350 ohne das am ersten Kupplungsteil 310 befestigte Werkzeug abheben.

Figur 9 zeigt eine alternative Ausführungsform der Wellenkupplung, bei der die Feder 334, welche die Federkraft für die Vorspannung des Kegelsitzes bereitstellt, nicht wie in dem Beispiel aus Fig. 7 in dem ersten Kupplungsteil 310, sondern in dem zweiten Kupplungsteil 350 angeordnet ist. Die Funktion ist im Wesentlichen die Gleiche wie in dem vorherigen Beispiel gemäß Fig. 3-7. Wobei der erste Kupplungsteil 310 einfacher ausgestaltet sein kann (weil die Feder wegfällt). Beispielsweise kann der erste Kupplungsteil 310 ein starres Bauteil sein. Die Feder 334 ist hingegen zwischen dem Oberteil 361 und dem Unterteil 351 des Gehäuses des zweiten Kupplungsteils 350 angeordnet. Beim Einführen des ersten Kupplungsteils 310 in den zweiten Kupplungsteil 350 wird gegen die Federkraft einer oder mehrerer Federn 334' das Unterteil 351 hin zum Oberteil 361 gedrückt, bis das Sicherungselement an einer Wellenschulter der Welle 330 des ersten Kupplungsteils einrastet, wodurch die beiden Kupplungsteile 310 und 350 miteinander verbunden werden und der Kegelsitz durch die Federkraft vorgespannt wird. Das Lösen der Wellenkupplung funktioniert analog wie in dem vorherigen Beispiel (siehe z.B. Fig. 8).

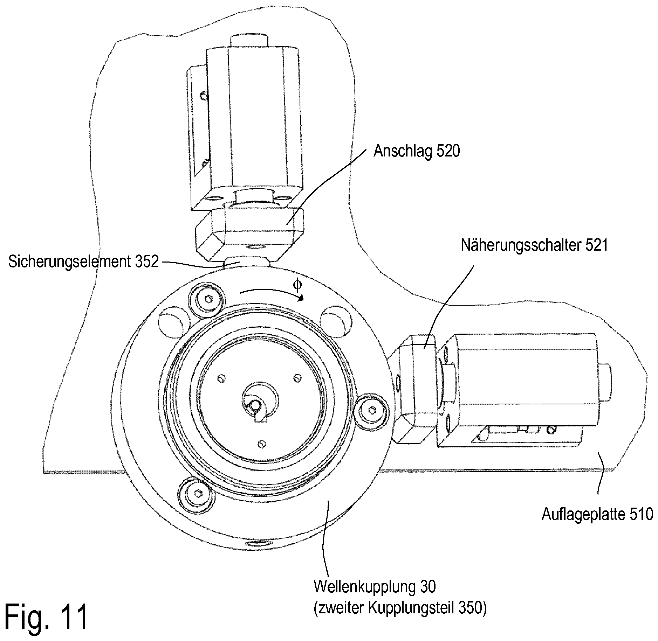

Figur 10 illustriert exemplarisch eine Wechselstation 50, welche für ein automatisches, robotergestütztes Wechseln von Werkzeugen (z.B. Schleifscheiben 11 inkl. dem ersten Kupplungsteil 310) geeignet ist. Figur 11 zeigt ein Detail der Wechselstation 50 mit eingelegter Wellenkupplung 30. Im Arbeitsbereich eines Roboters/Manipulators (z.B. in einer Roboterzelle) können mehrere gleichartige Wechselstationen (z.B. nebeneinander) angeordnet sein. Auf diese Weise können unterschiedliche Werkzeuge für den vom Roboter/Manipulator durchgeführten (Bearbeitungs-) Prozess zur Verfügung gestellt werden; durch einfaches Wechseln der Welle (mit daran befestigtem Werkzeug) können somit mehrere (unterschiedliche) Arbeitsschritte an einem Arbeitsplatz mit einem Roboter/Manipulator realisiert werden.

Die Wechselstation umfasst eine Basis 501, welche in der Regel ortsfest ist und eine definierte Position aufweist, welche der Robotersteuerung bekannt ist. An der Basis 501 ist eine Auflageplatte 510 gelagert. Im dargestellten Bespiel ist die Auflageplatte 510 an der Basis 501 mittels Gewindestiften 516, welche mit der Basis 501 verschraubt und durch korrespondierende Löcher in der Auflageplatte 510 hindurchgeführt sind, verschiebbar gelagert (gegen die z-Richtung). Die Auflageplatte 510 wird mittels Federn 515, die zwischen Auflageplatte 510 und auf die Gewindestifte 516 aufgeschraubte Muttern wirken, gegen die Basis 501 gedrückt. Die Auflageplatte 510 kann demnach gegen die Kraft der Federn 515 von der Basis 501 angehoben werden. Der Zweck dieser Lagerung wird weiter unten erläutert. In einem alternativen Ausführungsbeispiel ist die Auflageplatte 510 starr mit der Basis 501 verbunden oder die Basis 501 dient gleichzeitig als Auflageplatte 510. Auch die Abdeckung 505 ist optional.

In der Auflageplatte 510 ist eine Ausnehmung 511 vorgesehen, in welche der Roboter (siehe Fig. 1, Manipulator 10) die Wellenkupplung 30 seitlich einführen kann. Die Wellenkupplung wir in dem dargestellten Beispiel in y-Richtung (siehe Pfeil in Fig. 10) in die Ausnehmung 511 eingeführt. Am hinteren Ende der Ausnehmung 511 kann diese eine kreisrunde Kontur aufweisen. Des Weiteren kann die obere Kante der Ausnehmung 511 angefast sein. Die Fase 512 bildet einen Konus, an dem der erste Kupplungsteil 310 der Wellenkupplung 30 aufliegen kann. Genauer gesagt, liegt der Konus 345 der Hohlwelle 320 des ersten Kupplungsteils 310 (siehe z.B. Fig. 7) an der Fase 512 auf, sofern die Verbindung zwischen den beiden Kupplungsteilen 310, 350 gelöst ist. Die Lage der Drehachse R der Motorwelle der Schleifmaschine 11 (vgl. Fig. 2) ist in Fig. 10 ebenso dargestellt (in einer Situation, in der die Wellenkupplung 30 in die Ausnehmung 511 eingeführt ist).

Auf der Auflageplatte 510 sind mindestens ein Anschlag 520 und ein Näherungsschalter 521 (z.B. ein Kontaktschalter) angeordnet. Die Funktion des Anschlags und des Näherungsschalters 521 wird in der Darstellung in Fig. 11 deutlich. In Fig. 11 ist eine Situation dargestellt, in der die Wellenkupplung 30 gerade so gedreht wurde, dass das äußere Ende des Sicherungselementes 352 am Anschlag 520 anliegt. Das Drehen der Wellenkupplung 30 gegen den Anschlag wurde mit Bezug auf Fig. 8 erläutert. In der in Fig. 10 gezeigten Stellung ist der Drehwinkel z.B. definiert als φ=0° (ohne Beschränkung der Allgemeinheit). In dieser Position drückt der Anschlag 520 das Sicherungselement 352 in den zweiten Kupplungsteil 350 hinein und löst die Rastverbindung mit der Welle 330. Nach dem Lösen der Wellenverbindung verbleibt das Werkzeug 11 mit dem ersten Kupplungsteil 310 in der Wechselstation 50 und kann später (z.B. manuell) durch ein neues Werkzeug 11 ersetzt werden.

Zum Koppeln eines neuen Werkzeugs bewegt der Roboter die Schleifmaschine 10 so zu einer Wechselstation 50 mit einer eingelegten neuen Schleifscheibe 11 (inkl. erstem Kupplungsteil 310), dass die Drehachse R des Motors der Schleifscheibe 11 koaxial zu der Drehachse des zu koppelnden Werkzeugs liegt (vgl. Fig. 3). Der Vorgang des Koppelns wurde bereits mit Bezugnahme auf Fig. 3-7 detailliert beschrieben. Um den Vorgang zu überwachen dreht der Manipulator 10 die Wellenkupplung so, dass das äußere Ende des Sicherungselementes 352 in Richtung des Näherungsschalters 521 zeigt (φ=90°), sodass dieser das Sicherungselement 352 detektiert. Diese Drehung kann vom Manipulator selbst durchgeführt werden, oder durch Ansteuern des Motors der Schleifmaschine.

Während des Koppelns bewegt sich das Sicherungselement 352 um eine Distanz d von dem Näherungsschalters 521 weg (vgl. Fig. 4-5) und danach wieder zurück in die Ausgangslage (vgl. Fig. 6-7). Diese Bewegung (vor, zurück und wieder vor) des Sicherungselementes 352 kann von dem Näherungsschalter 521 detektiert und auf dieser Weise ein ordnungsgemäßes Koppeln der beiden Kupplungsteile 310, 350 überwacht werden. Näherungsschalter 521 detektieren die Anwesenheit des Sicherungselementes 352 in der Regel über einen mechanischen Kontakt. Es können jedoch auch berührungslose (z.B. induktive, kapazitive oder optische) Näherungsschalter verwendet werden, die allgemein auch al Näherungssensoren (*proximity sensors*) bezeichnet werden.

Ein Sicherheitsmerkmal besteht in der federnden Lagerung der Auflageplatte 510 an der Basis 501. Wenn das Lösen der Wellenkupplung 30 (aus welchen Gründen auch immer) fehlschlägt, dann wird der Roboter beim Versuch, die Schleifmaschine 11 mit den zweiten Kupplungsteil 350 anzuheben, gleichzeitig auch die Auflageplatte 510 gegen die Federkraft der Federn 515 anheben, da der nicht gelöste erste Kupplungsteil 310 die Auflageplatte mitnimmt, wenn die Kupplung in die Ausnehmung 511 eingeführt ist. Dieses Anheben der Auflageplatte 510 kann mittels eines Sensors detektiert werden. Ein geeigneter Sensor hierfür ist z.B. ein Kontaktschalter, ein Näherungssensor, eine Lichtsensor (der von der Auflageplatte abgedeckt wird, wenn sie nicht angehoben ist), etc.

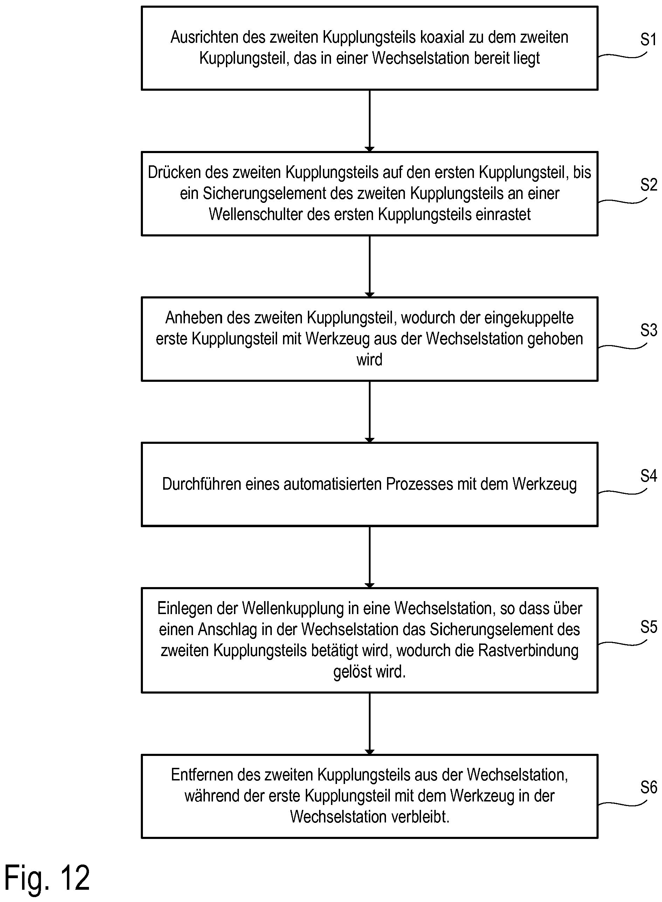

Figur 12 ist ein Flussdiagramm, das den Ablauf eines Wellenwechselvorganges darstellt, also das Einkuppeln einer Wellenkupplung wie beispielsweise ein Fig. 3-7 dargestellt sowie das Lösen der Wellenkupplung wie beispielsweise in Fig. 11 dargestellt. Als Ausgangssituation wird angenommen, dass eine Welle (des ersten Kupplungsteils 310, siehe Fig. 3) in einer Wechselstation bereit liegt (vgl. Fig. 10, ersten Kupplungsteils 310 liegt in Ausnehmung 511 der Wechselstation 50). Mit Hilfe eines Manipulators 1 (vgl. Fig. 1) wird eine Werkzeugmaschine mit dem zweiten Kupplungsteil zur Wechselstation so hinbewegt, dass die beiden Kupplungsteile im Wesentlichen koaxial ausgerichtet sind (siehe Fig. 12, Schritt S1). Im Anschluss kann der Manipulator die beiden Kupplungsteile aneinander drücken bis ein Sicherungselement des zweiten Kupplungsteils an einer Wellenschulter des ersten Kupplungsteils einrastet (siehe Fig. 12, Schritt S2, vgl. auch Fig. 6-7, Sicherungselement 352 rastet an Wellenschulter 339 ein). Danach kann der Manipulator den zweiten Kupplungsteil (und damit die ganze Wellenkupplung samt Werkzeug) anheben und aus der Wechselstation entfernen (Fig. 12, Schritt S3). In dem in Fig. 10 dargestellten Beispiel wird der zweite Kupplungsteil aus der Ausnehmung 511 herausbewegt. Im Anschluss kann das gekoppelte Werkzeug für die automatisierte Bearbeitung eines Werkstücks verwendet werden (siehe Fig. 12, Schritt S4). Am Ende des Bearbeitungsprozesses (bzw. eines Teils davon) kann die Wellenkupplung wieder in eine Wechselstation eingelegt werden (in die gleiche wie vorher oder in eine andere), wobei beim Einlegen über einen Anschlag in der Wechselstation (vgl. Fig. 10, Anschlag 520) das Sicherungselement betätigt wird, wodurch die Rastverbindung gelöst wird (vgl. Zustand vor dem Lösen in Fig. 7, Zustand nach dem Lösen in Fig. 6), siehe Fig. 12, Schritt S5. Schließlich kann der Manipulator den gelösten zweiten Kupplungsteil aus der Wechselstation herausbewegen und der erste Kupplungsteil mit dem (gebrauchten) Werkzeug verbleibt in der Wechselstation (Fig. 12, Schritt S6).

Die hier beschriebenen Ausführungsbeispiele der Wellenkupplung und der Wechselstation, kommen ohne eigene Energieversorgung (z.B. elektrischer Strom oder Druckluft) aus. Folglich benötigt die Wellenkupplung keinerlei Zuleitungen für Strom, Druckluft und dgl. Steckverbinder, Schleifkontakte, etc. können vermieden werden. Auch die Wechselstation (siehe Fig. 10) benötigt keinen eigenen Antrieb.

Im Folgenden werden einige Aspekte der hier beschriebenen Ausführungsbeispiele zusammengefasst. Es handelt sich dabei nicht um eine vollständige, sondern rein exemplarische Auflistung relevanter technischer Merkmale. Ein Ausführungsbeispiel betrifft eine Wellenkupplung, die einen ersten Kupplungsteil mit einer Welle und einem konischen Wellenabschnitt aufweist (vgl. z.B. Fig. 3). An einem ersten Ende der Welle ist ein Werkzeug (z.B. eine Schleifscheibe, ein Bohrer, etc.) fixierbar, und an einem zweiten Ende der Welle ist eine Wellenschulter angeordnet. Die Wellenkupplung weist einen zweiten Kupplungsteil auf, der eine konische Nabe aufweist, in die der konische Wellenabschnitt des ersten Kupplungsteils zur Bildung eines Kegelsitzes einführbar ist. Der zweite Kupplungsteil weist des Weiteren ein quer zu einer Rotationsachse der Wellenkupplung verschiebbares Sicherungselement aufweist, das so angeordnet ist, dass es an der Wellenschulter der Welle einrasten kann (vgl. Fig. 6 und 7). Mindestens eine Feder ist so in der Wellenkupplung angeordnet, dass sie eine Federkraft erzeugt, welche bei eingerastetem Sicherungselement in axialer Richtung auf den Kegelsitz wirkt und diesen vorspannt.

Die Feder, welche den Kegelsitz vorspannt, kann entweder in dem ersten Kupplungsteil (siehe Fig. 3, Feder 334) oder in dem zweiten Kupplungsteil (siehe Fig. 9, Feder 334') vorgesehen sein. Gemäß einem Ausführungsbeispiel (siehe z.B. Fig. 3) weist der erste Kupplungsteil eine Hohlwelle aufweist, welche an der Welle axial verschiebbar gelagert ist. Der konische Wellenabschnitt ist dabei ein Teil der Hohlwelle (siehe Fig. 3, Wellenabschnitt 321 außen auf der Hohlwelle 320). Die Feder ist im ersten Kupplungsteil enthalten und so angeordnet, dass beim Einführen des konischen Wellenabschnittes in die konische Nabe die Hohlwelle gegen die Federkraft der Feder auf der Welle verschoben wird (siehe Fig. 4 bis 6). Die Relativbewegung zwischen Hohlwelle und Welle ein Eindringen der Wellenschulter der Welle in den zweiten Kupplungsteil, bis dass das Sicherungselement an der Wellenschulter einrasten und eine Rastverbindung bilden kann.

Die Welle kann eine weitere Wellenschulter aufweisen, die einen Endanschlag für die Hohlwelle bildet, wobei die Federkraft der Feder die Hohlwelle gegen den Endanschlag drückt. Eine Passfeder kann so zwischen der Welle und der Hohlwelle angeordnet sein, dass eine axiale Verschiebung (Relativbewegung) zwischen Welle und Hohlwelle möglich ist, eine Verdrehung zwischen Welle und Hohlwelle jedoch blockiert ist.

Wie erwähnt, kann die Feder, die den Kegelsitz vorspannt auch im zweiten Kupplungsteil angeordnet sein (siehe Fig. 9, Feder 334'). In diesem Fall umfasst der zweite Kupplungsteil ein Unterteil und ein relativ zum Unterteil axial verschiebbares Oberteil auf. Die konische Nabe ist in dem Oberteil angeordnet, und die mindestens eine Feder ist zwischen Unterteil und Oberteil derart angeordnet, dass beim Einführen des konischen Wellenabschnittes in die konische Nabe gegen die Federkraft der Feder das Unterteil zum Oberteil hin verschoben wird (siehe z.B. Fig. 9, Feder 334' wirkt zwischen Unterteil 351 und Oberteil 361 und spannt den Kegelsitz vor).

Ein äußeres Ende des Sicherungselementes kann aus dem zweiten Kupplungsteil herausragen. Des Weiteren kann das Sicherungselement eine (zentrale) Öffnung aufweisen, in die die Welle soweit eingeschoben werden kann, bis das Sicherungselement an der Wellenschulter der Welle einrasten kann, wobei die Rastverbindung ein Zurückziehen der Welle aus der Öffnung heraus verhindert. Beim Einrasten wird z.B. eine Kante der zentralen Öffnung im Sicherungselement hinter die Wellenschulter der Welle verschoben (quer zur Rotationsachse der Wellenkupplung vgl. Fig. 6 bis 7). Bei eingerastetem Sicherungselement spannt die Federkraft der Feder den konischen Wellenabschnitt gegen die konische Nabe vor. Die Kante der Öffnung in dem Sicherungselement und eine umlaufende Kante der Welle können jeweils angefast sein. Die Fase an der Kante der Welle und die Fase an der Kante der Öffnung können beim Einführen der Welle in die Öffnung aneinander gleiten, während das Sicherungselement verschoben wird.

Ein weiteres Ausführungsbeispiel betrifft ein System mit einem Manipulator und einer Werkzeugmaschine mit einer Motorwelle zum Antrieb eines Werkzeugs. Dabei ist die Werkzeugmaschine mit dem Manipulator gekoppelt und von diesem positionierbar. Zum Koppeln der Motorwelle der Werkzeugmaschine mit dem Werkzeug umfasst das System eine Wellenkupplung, die gemäß einem der hier beschriebenen Ausführungsbeispiele konstruiert sein kann.

Ein weiteres Ausführungsbeispiel betrifft ein System mit einer Wellenkupplung, die gemäß einem der hier beschriebenen Ausführungsbeispiele konstruiert sein kann, und mit mindestens einer Wechselstation. Die Wechselstation weist eine Auflageplatte mit einer Ausnehmung auf. Die Ausnehmung definiert eine Ablageposition, in der das erste Kupplungsteil der Wellenkupplung in die Ausnehmung einlegbar ist. Der konische Wellenabschnitt des ersten Kupplungsteils steht dabei von der Auflageplatte ab. Das System kann weiter einen auf der Auflageplatte angeordneten Anschlag aufweisen. Ein Ende des Sicherungselements kann seitlich aus dem zweiten Kupplungsteil herausragen, und der Anschlag kann so relativ zu der Ablageposition angeordnet sein, dass der Anschlag das herausragende Ende des Sicherungselements in das zweite Kupplungsteil hineindrücken kann, wodurch die Rastverbindung gelöst wird. Das System kann einen Näherungssensor aufweisen, der so angeordnet ist, dass er während des Koppelns der beiden Kupplungsteile eine Verschiebung des Sicherungselementes detektieren kann. Die Auflageplatte kann federnd an einer Basis gelagert sein (siehe z.B. Fig. 10, Federn 515), weshalb die Auflageplatte gegenüber der Basis angehoben werden kann (Sicherheitsmerkmal).

Ein weiteres Ausführungsbeispiel betrifft ein Verfahren, gemäß dem mittels eines Manipulators zunächst ein zweites Kupplungsteils einer Wellenkupplung koaxial zu einem ersten Kupplungsteil der Wellenkupplung ausgerichtet wird (siehe z.B. Fig. 3), der in einer Wechselstation bereit liegt (siehe z.B. Fig. 11). Anschließend wird das zweite Kupplungsteil auf den ersten Kupplungsteil gedrückt, bis ein Sicherungselement des zweiten Kupplungsteils an einer Wellenschulter des ersten Kupplungsteils einrastet und eine Rastverbindung bildet (siehe z.B. Fig. 6 und 7, sowie Fig. 9). Nach dem Einkuppeln kann durch das Anheben des zweiten Kupplungsteils auch der erste Kupplungsteil (mit dem Werkzeug) aus der Wechselstation gehoben werden. Mittels des an dem ersten Kupplungsteil montierten Werkzeugs kann mit Hilfe des Manipulators automatisiert ein (Bearbeitungs-) Prozess an einem Werkstück durchgeführt werden. Im Anschluss wird die Wellenkupplung in die Wechselstation (oder eine andere Wechselstation) derart eingelegt, dass über einen Anschlag in der jeweiligen Wechselstation das Sicherungselement des zweiten Kupplungsteils betätigt werden kann, wodurch die Rastverbindung gelöst wird. Nach dem Auskuppeln wird das zweite Kupplungsteil aus der jeweiligen Wechselstation mittels des Manipulators entfernt, während der erste Kupplungsteil in der Wechselstation verbleibt.

Durch das Drücken des zweiten Kupplungsteils auf den ersten Kupplungsteil kann ein konischer Wellenabschnitt des ersten Kupplungsteils in eine konische Nabe des zweiten Kupplungsteils eingeführt werden, wodurch ein Kegelsitz gebildet wird. Gegen die Wirkung einer Federkraft kann die Wellenschulter des ersten Kupplungsteils so weit in den zweiten Kupplungsteil eingeschoben werden, bis das Sicherungselement an der Wellenschulter einrastet, sodass die Federkraft im eingerasteten Zustand den Kegelsitz vorspannt. Beim Einrasten wird das Sicherungselements quer zu einer Rotationsachse der Wellenkupplung bewegt, und diese Bewegung kann mittels eines Näherungssensors detektiert werden. Beim Lösen der Rastverbindung kann die Wellenschulter mittels einer Feder vom Sicherungselement weg gedrückt werden (siehe z.B. Fig. 7, Feder 334, oder Fig. 9, Feder 334'). Nach dem Einlegen der Wellenkupplung in die Wechselstation (oder eine andere Wechselstation) kann die Wellenkupplung so um ihre Rotationsachse gedreht werden, bis dass das aus dem zweiten Kupplungsteil herausragendes Ende des Sicherungselementes am Anschlag der Wechselstation anliegt.

## Patentansprüche

1. Eine Wellenkupplung, die aufweist:
einen ersten Kupplungsteil (310) mit einer Welle (330) und einem konischen Wellenabschnitt (321), wobei an einem ersten Ende der Welle (330) ein Werkzeug (11) fixierbar ist und an einem zweiten Ende der Welle eine Wellenschulter (339) angeordnet ist;
**dadurch gekennzeichnet, dass** die Wellenkupplung einen zweiten Kupplungsteil (350) aufweist, der eine konische Nabe (362) aufweist, in die der konische Wellenabschnitt (321) zur Bildung eines Kegelsitzes einführbar ist, und der ein quer zu einer Rotationsachse der Wellenkupplung (30) verschiebbares Sicherungselement (352) aufweist, welches so angeordnet ist, dass es an der Wellenschulter (339) der Welle (330) einrasten kann; und
mindestens eine Feder (334, 334'), welche so angeordnet ist, dass sie eine Federkraft erzeugt, welche bei eingerastetem Sicherungselement (352) in axialer Richtung auf den Kegelsitz wirkt und diesen vorspannt.

2. Die Wellenkupplung gemäß Anspruch 1, wobei ein äußeres Ende des Sicherungselementes (352) aus dem zweiten Kupplungsteil (350) herausragt.

3. Die Wellenkupplung gemäß Anspruch 1 oder 2,
wobei der erste Kupplungsteil (310) eine Hohlwelle (320) aufweist, welche an der Welle (330) axial verschiebbar gelagert ist,
wobei der konische Wellenabschnitt (321) Teil der Hohlwelle ist (320), und
wobei die Feder im ersten Kupplungsteil (310) enthalten und so angeordnet ist, dass beim Einführen des konischen Wellenabschnittes (321) in die konische Nabe (362) die Hohlwelle (320) gegen die Federkraft der Feder (334) auf der Welle (330) verschoben wird.

4. Die Wellenkupplung gemäß Anspruch 1 oder 2,
wobei der erste Kupplungsteil (310) eine Hohlwelle (320) aufweist, welcher an der Welle (330) axial verschiebbar gelagert ist,
wobei der konische Wellenabschnitt (321) Teil einer Hohlwelle ist (320), und
wobei die Feder im ersten Kupplungsteil (310) enthalten und so angeordnet ist, dass beim Einführen des konischen Wellenabschnittes (321) in die konische Nabe (362) die Hohlwelle (320) gegen die Federkraft der Feder (334) auf der Welle (330) verschoben wird, wodurch die Wellenschulter (339) der Welle (330) soweit in den zweiten Kupplungsteil (350) eindringt, bis dass das Sicherungselement (352) an der Wellenschulter (339) einrastet und eine Rastverbindung bildet.

5. Die Wellenkupplung gemäß 3 oder 4,
wobei die Welle (330) eine weitere Wellenschulter (338) aufweist, die einen Endanschlag für die Hohlwelle (320) bildet, wobei die Federkraft der Feder (334) die Hohlwelle (320) gegen den Endanschlag drückt.

6. Die Wellenkupplung gemäß einem der Ansprüche 3 bis 5, die weiter eine Passfeder (336) aufweist, die so zwischen der Welle (330) und der Hohlwelle (320) angeordnet ist, dass eine axiale Verschiebung zwischen Welle (330) und Hohlwelle (320) möglich ist, eine Verdrehung jedoch blockiert ist.

7. Die Wellenkupplung gemäß Anspruch 1 oder 2,
wobei der zweite Kupplungsteil (350) ein Unterteil (351) und ein relativ zum Unterteil (351) axial verschiebbares Oberteil (361) aufweist, in dem die konische Nabe (362) angeordnet ist,
wobei die mindestens eine Feder (334') zwischen Unterteil (351) und Oberteil (361) so angeordnet ist, dass beim Einführen des konischen Wellenabschnittes (321) in die konische Nabe (362) gegen die Federkraft der Feder (334') das Unterteil (351) zum Oberteil (361) hin verschoben wird.

8. Die Wellenkupplung gemäß einem der Ansprüche 1 bis 7,
wobei das Sicherungselement (352) eine Öffnung (355) aufweist, in die die Welle (330) soweit eingeschoben werden kann, bis das Sicherungselement (352) an der Wellenschulter (339) der Welle (330) einrasten kann, und
wobei die Rastverbindung ein Zurückziehen der Welle (330) aus der Öffnung (355) heraus verhindert.

9. Die Wellenkupplung gemäß Anspruch 8,
wobei bei eingerastetem Sicherungselement (352) die Federkraft der Feder (334) den konische Wellenabschnitt (321) gegen die konische Nabe (362) vorspannt.

10. Die Wellenkupplung gemäß Anspruch 8 oder 9,
wobei eine Kante der Öffnung (355) in dem Sicherungselement (352) und eine umlaufende Kante der Welle (330) jeweils angefast sind,
wobei die Fase (341) an der Kante der Welle (330) und die Fase (356) an der Kante der Öffnung (355) beim Einführen der Welle (330) in die Öffnung aneinander gleiten, wodurch das Sicherungselement (352) verschoben wird.

11. Ein System, das folgendes aufweist:
ein Manipulator (1);
eine Werkzeugmaschine (10) mit einer Motorwelle zum Antrieb eines Werkzeugs (11), wobei die Werkzeugmaschine (10) mit dem Manipulator (1) gekoppelt und von diesem positionierbar ist;
eine Wellenkupplung (30) gemäß einem der Ansprüche 1 bis 10 zum Koppeln der Motorwelle der Werkzeugmaschine (10) mit dem Werkzeug (11).

12. Ein System, das folgendes aufweist:
eine Wellenkupplung (30) gemäß einem der Ansprüche 1 bis 10; und
mindestens eine Wechselstation (50), die eine Auflageplatte (510) mit einer Ausnehmung (511) aufweist, die eine Ablageposition definiert, in der das erste Kupplungsteil (310) der Wellenkupplung (30) in die Ausnehmung (511) einlegbar ist, wobei der konische Wellenabschnitt (321) des ersten Kupplungsteils (310) von der Auflageplatte (510) absteht.

13. Das System gemäß Anspruch 12, das weiter einen auf der Auflageplatte (510) angeordneten Anschlag (520) aufweist,
wobei ein Ende des Sicherungselements (352) seitlich aus dem zweiten Kupplungsteil (350) herausragt und der Anschlag (520) so relativ zu der Ablageposition so angeordnet ist, dass der Anschlag (520) das herausragende Ende des Sicherungselements (352) in den zweiten Kupplungsteil (350) hineindrücken kann, wodurch die Rastverbindung gelöst wird.

14. Das System gemäß Anspruch 12 oder 13, das weiter aufweist:
einen Näherungssensor (521), der so angeordnet ist, dass während des Koppelns der beiden Kupplungsteile (310, 350) er eine Verschiebung des Sicherungselementes (352) detektieren kann.

15. Das System gemäß einem der Ansprüche 12 bis 14,
wobei die Auflageplatte (510) federnd an einer Basis (501) derart gelagert ist, dass die Auflageplatte (510) gegenüber der Basis (501) angehoben werden kann.

16. Verfahren, das folgendes umfasst:
Ausrichten - mittels eines Manipulators (1) - eines zweiten Kupplungsteils (350) einer Wellenkupplung, der eine konische Nabe (362) aufweist, koaxial zu einem ersten Kupplungsteil (310) der Wellenkupplung, der einen konischen Wellenabschnitt (321) aufweist und in einer Wechselstation (50) bereit liegt;
Drücken des zweiten Kupplungsteils (350) auf den ersten Kupplungsteil (310) bis ein Sicherungselement (352) des zweiten Kupplungsteils (350) an einer Wellenschulter (339) des ersten Kupplungsteils (310) einrastet und eine Rastverbindung bildet;
Anheben des zweiten Kupplungsteils (350), wodurch der erste Kupplungsteil (350) aus der Wechselstation gehoben wird;
Durchführen eines automatisierten Prozesses mit einem an dem ersten Kupplungsteil (310) montierten Werkzeug (11) mittels des Manipulators;
Einlegen der Wellenkupplung in die Wechselstation (50) oder eine andere Wechselstation derart, dass über einen Anschlag (520) in der jeweiligen Wechselstation das Sicherungselement (352) des zweiten Kupplungsteils (350) betätigt wird, wodurch die Rastverbindung gelöst wird; und
Entfernen des zweiten Kupplungsteils (350) aus der jeweiligen Wechselstation mittels des Manipulators (1), während der erste Kupplungsteil (310) in der Wechselstation verbleibt.

17. Verfahren gemäß Anspruch 16,
wobei durch das Drücken des zweiten Kupplungsteils (350) auf den ersten Kupplungsteil (310) der konische Wellenabschnitt (321) des ersten Kupplungsteils (310) in die konische Nabe (362) des zweiten Kupplungsteils (350) eingeführt wird, wodurch ein Kegelsitz gebildet wird, und
wobei gegen die Wirkung einer Federkraft die Wellenschulter (339) des ersten Kupplungsteils (310) so weit in den zweiten Kupplungsteil eingeschoben wird, bis das Sicherungselement (352) an der Wellenschulter (339) einrastet, sodass die Federkraft im eingerasteten Zustand den Kegelsitz vorspannt.

18. Verfahren gemäß Anspruch 16 oder 17,
wobei beim Einrasten das Sicherungselement (352) quer zu einer Rotationsachse der Wellenkupplung bewegt wird und diese Bewegung mittels eines Näherungssensors detektiert wird.

19. Verfahren gemäß einem der Ansprüche 16 bis 18,
wobei nach dem Einlegen der Wellenkupplung in die Wechselstation (50) oder eine andere Wechselstation die Wellenkupplung so um ihre Rotationsachse gedreht wird, bis dass ein aus dem zweiten Kupplungsteil herausragendes Ende des Sicherungselementes (352) am Anschlag (520) anliegt.

20. Verfahren gemäß einem der Ansprüche 16 bis 19,
wobei beim Lösen der Rastverbindung die Wellenschulter (339) mittels einer Feder (334) vom Sicherungselement (352) weg gedrückt wird.

## Claims

1. Shaft coupling, comprising:
a first coupling part (310) having a shaft (330) and a tapered shaft portion (321), wherein a tool (11) is fixable at a first end of the shaft (330) and a shaft shoulder (339) is arranged at a second end of the shaft;
**characterized in that** the shaft coupling comprises a second coupling part (350) comprising a tapered hub (362) in which the tapered shaft portion (321) can be introduced to form a tapered seat, and comprising a retaining element (352) movable perpendicularly to a rotation axis of the shaft coupling (30) and arranged such that it can engage the shaft shoulder (339) of the shaft (330); and
at least a spring (334, 334') arranged such that it generates a spring force which, when the retaining element (352) is engaged, acts on the tapered seat in an axial direction and preloads it.

2. Shaft coupling according to claim 1, wherein an outer end of the retaining element (352) protrudes from the second coupling part (350).

3. Shaft coupling according to one of the claims 1 or 2,
wherein the first coupling part (310) comprises a hollow shaft (320) mounted to the shaft (330) such that it is movable in the axial direction,
wherein the tapered shaft portion (321) is part of the hollow shaft (320), and
wherein the spring is comprised in the first coupling part (310) and is arranged such that, when inserting the tapered shaft portion (321) into the tapered hub (362), the hollow shaft (320) is moved on the shaft (330) against the spring force of the spring (334).

4. Shaft coupling according to claim 1 or 2,
wherein the first coupling part (310) comprises a hollow shaft (320) mounted to the shaft (330) such that it is movable in the axial direction,
wherein the tapered shaft portion (321) is part of the hollow shaft (320), and
wherein the spring is comprised in the first coupling part (310) and is arranged such that, when inserting the tapered shaft portion (321) into the tapered hub (362), the hollow shaft (320) is moved on the shaft (330) against the spring force of the spring (334), whereby the shaft shoulder (339) of the shaft (330) penetrates into the second coupling part (350) until the retaining element (352) engages the shaft shoulder (339) and forms a snap connection.

5. Shaft coupling according to claim 3 or 4,
wherein the shaft (330) comprises a further shaft shoulder (338) forming an end stop for the hollow shaft (320), wherein the spring force of the spring (334) presses the hollow shaft (320) against the end stop.

6. Shaft coupling according to one the claims 3 to 5, further comprising a key (336) arranged between the shaft (330) and the hollow shaft (32) such that an axial shift between the shaft (330) and the hollow shaft (320) is allowed, but a torsion is blocked.

7. Shaft coupling according to claim 1 or 2,
wherein the second coupling part (350) comprises a lower part (351) and an upper part (361) movable in an axial direction relative to the bottom part (351), and in which the tapered hub (362) is arranged,
wherein the at least one spring (334') is arranged between the lower part (351) and the upper part (361) such that, when inserting the tapered shaft portion (321) into the tapered hub (362), the lower part (351) is moved to the upper part (361) against the spring force of the spring (334').

8. Shaft coupling according to one of the claims 1 to 7,
wherein the retaining element (352) comprises an opening (355) into which the shaft (330) can be inserted until the retaining element (352) engages the shaft shoulder (339) of the shaft (330), and
wherein the snap connection prevents the shaft (330) from being pulled back from the opening (355).

9. Shaft coupling according to claim 8,
wherein, when the retaining element (352) is engaged, the spring force of the spring (334) preloads the tapered shaft portion (321) against the tapered hub (362).

10. Shaft coupling according to claim 8 or 9,
wherein an edge of the opening (355) in the retaining element (352) and a circumferential edge of the shaft (330) are respectively chamfered,
wherein the chamfer (341) at the edge of the shaft (330) and the chamfer (356) at the edge of the opening (355) slide against each other when inserting the shaft (330) into the opening, thereby moving the retaining element (352).

11. System, comprising:
a manipulator (1);
a tool machine (10) having a motor shaft for driving a tool (11), wherein the tool machine (10) is coupled with the manipulator (1) and can be positioned by it;
a shaft coupling (30) according to one of the claims 1 to 10 for coupling the motor shaft of the tool machine (10) with the tool (11).

12. System, comprising:
a shaft coupling (30) according to one of the claims 1 to 10; and
at least one changing station (50) comprising a support plate (510) having a recess (511) and defining a support position, in which the first coupling part (310) of the shaft coupling (30) can be inserted into the recess (511), wherein the tapered shaft portion (321) of the first coupling part (310) protrudes from the support plate (510).

13. System according to claim 12, further comprising a stop (520) arranged on the support plate (510),
wherein an end of the retaining element (352) protrudes laterally from the second coupling part (350) and the stop (520) is arranged relative to the support position such that the stop (520) can push in the protruding end of the retaining element (352) into the second coupling part (350), thereby loosening the snap connection.

14. System according to claim 12 or 13, further comprising:
an approach sensor (521) arranged such that, during the coupling of both coupling parts (310, 350), it can detect a shift of the retaining element (352).

15. System according to one of the claims 12 to 14,
wherein the support plate (510) is resiliently mounted to a base (501) such that the support plate (510) can be lifted relative to the base (501).

16. Method, comprising:
positioning - by means of a manipulator (1) - a second coupling part (350) of a shaft coupling, which comprises a tapered hub (362), coaxially to a first coupling part (310) of the shaft coupling, which comprises a tapered shaft portion (321) and already lies in a changing station (50);
pressing the second coupling part (350) onto the first coupling part (310) until a retaining element (352) of the second coupling part (350) engages a shaft shoulder (339) of the first coupling part (310) and forms a snap connection;
lifting the second coupling part (350), thereby lifting the first coupling part (310) from the changing station;
carrying out an automatic process with a tool (11) mounted at the first coupling part (310) by means of the manipulator;
inserting the shaft coupling into the changing station (50) or into another changing station such that the retaining element (352) of the second coupling part (350) is actuated via a stop (520) in the corresponding changing station, thereby loosening the snap connection; and
removing the second coupling part (350) from the corresponding changing station by means of the manipulator (1), while the first coupling part (310) remains in the changing station.

17. Method according to claim 16,
wherein, by pressing the second coupling part (350) onto the first coupling part (210), the tapered shaft portion (321) of the first coupling part (310) is inserted into the tapered hub (362) of the second coupling part (350), thereby forming a tapered seat, and
wherein the shaft shoulder (339) of the first coupling part (310) is inserted into the second coupling part against the action of a spring force until the retaining element (352) engages the shaft shoulder (339), so that the spring force preloads the tapered seat in the engaged state.

18. Method according to claim 16 or 17,
Wherein, during the engagement, the retaining element (352) is moved orthogonally to a rotation axis of the shaft coupling and this movement is detected by means of an approach sensor.

19. Method according to one of the claims 16 to 18,
wherein, after inserting the shaft coupling into the changing station (50) or into another changing station, the shaft coupling is rotated around its rotation axis until an end of the retaining element (352) protruding from the second coupling part abuts against the stop (520).

20. Method according to one of the claims 16 to 19,
wherein, when loosening the snap connection, the shaft shoulder (339) is pushed away from the retaining element (352) by means of a spring (334).

## Revendications

1. Accouplement d'arbre comprenant :
une première partie d'accouplement (310) ayant un arbre (330) et une section d'arbre conique (321), selon lequel à une première extrémité de l'arbre (330) un outil (11) peut être fixé et à une seconde extrémité de l'arbre un épaulement d'arbre (339) est arrangé ;
**caractérisé en ce que** l'accouplement d'arbre comprend une second partie d'accouplement (350) qui comprend un moyeu conique (362) dans lequel la section d'arbre conique (321) peut être introduite afin de former un siège conique, et qui comprend un élément de blocage (352) déplaçable perpendiculairement à un axe de rotation de l'accouplement d'arbre (30), et qui est arrangé de façon à pouvoir engager l'épaulement d'arbre (339) de l'arbre (330) ; et
au moins un ressort (334, 334') arrangé de manière à produire une force de ressort, laquelle, quand l'élément de blocage (352) est engagé, agit en direction axiale sur le siège conique et le sollicite.

2. Accouplement d'arbre selon la revendication 1, selon lequel une extrémité externe de l'élément de blocage (352) dépasse de la seconde partie d'accouplement (350).

3. Accouplement d'arbre selon l'une des revendications 1 ou 2,
selon lequel la première partie d'accouplement (310) comprend un arbre creux (320) monté sur l'arbre (330) de manière à pouvoir coulisser axialement,
selon lequel la section d'arbre conique (321) fait partie de l'arbre creux (320), et
selon lequel le ressort est compris dans la première partie d'accouplement (310) et arrangé de manière à ce que, en introduisant la section d'arbre conique (321) dans le moyeu conique (362), l'arbre creux (320) est déplacé sur l'arbre (330) contre la force de ressort du ressort (334).

4. Accouplement d'arbre selon l'une des revendications 1 ou 2,
selon lequel la première partie d'accouplement (310) comprend un arbre creux (320) monté sur l'arbre (330) de manière à pouvoir coulisser axialement,
selon lequel la section d'arbre conique (321) fait partie de l'arbre creux (320), et
selon lequel le ressort est compris dans la première partie d'accouplement (310) et arrangé de manière à ce que, en introduisant la section d'arbre conique (321) dans le moyeu conique (362), l'arbre creux (320) est déplacé sur l'arbre (330) contre la force de ressort du ressort (334), ce qui permet à l'épaulement d'arbre (339) de l'arbre (330) de pénétrer dans la seconde partie d'accouplement (350) jusqu'à ce que l'élément de blocage (352) engage l'épaulement d'arbre (339) et forme une liaison d'encliquetage.

5. Accouplement d'arbre selon l'une des revendications 3 ou 4,
selon lequel l'arbre (330) comprend un autre épaulement d'arbre (338) qui forme une butée de fin pour l'arbre creux (320), selon lequel la force de ressort du ressort (334) pousse l'arbre creux (320) contre la butée de fin.

6. Accouplement d'arbre selon l'une des revendications 3 à 5, comprenant en outre une clavette (336) arrangée entre l'arbre (330) et l'arbre creux (320) de manière à permettre un déplacement axial entre l'arbre (330) et l'arbre creux (320), mais à bloquer une torsion.

7. Accouplement d'arbre selon l'une des revendications 1 ou 2,
selon lequel la seconde partie d'accouplement (350) comprend une partie inférieure (351) et une partie supérieure (361) déplaçable axialement par rapport à la partie inférieure (351) et dans laquelle est arrangée le moyeu conique (362),
selon lequel le ou les ressorts (334') sont arrangés entre la partie inférieure (351) et la partie supérieure (361) da manière à ce que, en introduisant la portion d'arbre conique (321) dans le moyeu conique (362), la partie inférieure (351) se déplace en direction de la partie supérieure (361) contre la force de ressort du ressort (334').

8. Accouplement d'arbre selon l'une des revendications 1 à 7,
selon lequel l'élément de blocage (352) comprend une ouverture (355) dans laquelle l'arbre (330) peut être inséré jusqu'à ce que l'élément de blocage (352) engage l'épaulement d'arbre (339) de l'arbre (330), et
selon lequel la liaison d'encliquetage empêche l'arbre (330) d'être retiré de l'ouverture (355).

9. Accouplement d'arbre selon la revendication 8,
selon lequel, quand l'élément de blocage (352) est engagé, la force de ressort du ressort (334) sollicite la portion d'arbre conique (321) contre le moyeu conique (362).

10. Accouplement d'arbre selon l'une des revendications 8 ou 9,
selon lequel un bord de l'ouverture (355) dans l'élément de blocage (352) et un bord périphérique de l'arbre (330) sont respectivement chanfreinés,
selon lequel le chanfrein (341) sur le bord de l'arbre (330) et le chanfrein (356) sur le bord de l'ouverture (355) glissent l'un sur l'autre au moment de l'introduction de l'arbre (330) dans l'ouverture, déplaçant ainsi l'élément de blocage (352).

11. Système, comprenant :
un manipulateur (1) ;
une machine-outil (10) ayant un arbre moteur destiné à entrainer un outil (11), selon lequel la machine-outil (10) est couplée avec la manipulateur (1) et peut être positionnée par celui-ci ;
un accouplement d'arbre (30) selon l'une des revendications 1 à 10 destiné à coupler l'arbre moteur de la machine-outil (10) avec l'outil (11).

12. Système, comprenant :
un accouplement d'arbre (30) selon l'une des revendications 1 à 10 ; et
au moins un station de changement (50) comprenant une plaque de support (510) avec un évidement (511), laquelle définit une position de support, dans laquelle la première partie d'accouplement (310) de l'accouplement d'arbre (30) peut être introduite dans l'évidement (511), selon lequel la portion d'arbre conique (321) de la première partie d'arbre (310) dépasse de la plaque de support (510).

13. Système selon la revendication 12, comprenant en outre une butée arrangée sur la plaque de support (510),
selon lequel une extrémité de l'élément de blocage (352) dépasse latéralement de la seconde partie de d'accouplement (350) et la butée (520) est arrangée par rapport à la position de support de manière à ce que la butée (520) puisse enfoncer l'extrémité saillante de l'élément de blocage (352) dans la seconde partie d'accouplement (350), défaisant ainsi la liaison d'encliquetage.

14. Système selon l'une des revendications 12 ou 13, comprenant en outre :
un capteur de proximité (521) arrangé de manière à pouvoir détecter un déplacement de l'élément de blocage (352) pendant l'accouplement des deux parties d'accouplement (310, 350).

15. Système selon l'une des revendications 12 à 14,
selon lequel la plaque de support (510) est montée sur une base (501) de manière élastique, si bien que la plaque de support (510) peut être soulevée par rapport à la base (501).

16. Procédé, comprenant :
l'orientation - au moyen d'un manipulateur (1) - d'une seconde partie d'accouplement (350) d'un accouplement d'arbre, qui comprend un moyeu conique (362), de manière coaxiale par rapport à une première partie d'accouplement (310) de l'accouplement d'arbre, qui comprend une portion d'arbre conique (321) et se trouve déjà dans une station de changement (50) ;
le fait d'appuyer la seconde partie d'accouplement (350) contre la première partie d'accouplement (310) jusqu'à ce qu'un élément de blocage (352) de la seconde partie d'accouplement (350) engage un épaulement d'arbre (339) de la première partie d'accouplement (310) et forme une liaison d'encliquetage ;
le levage de la seconde partie d'accouplement (350), soulevant ainsi la première partie d'accouplement (350) par rapport à la station de changement ;
la réalisation d'un processus automatisé avec un outil (11) monté sur la première partie d'accouplement (310) au moyen du manipulateur ;
l'introduction de l'accouplement d'arbre dans la station de changement (50) ou dans une autre station de changement de manière à ce que l'élément de blocage (352) de la seconde partie d'accouplement (350) soit actionné via une butée (520) dans la station de changement correspondante, défaisant ainsi la liaison d'encliquetage ;
le fait de retirer la seconde partie d'accouplement (350) de la station de changement correspondante au moyen du manipulateur (1), tandis que la première partie d'accouplement reste dans la station de changement.

17. Procédé selon la revendication 16,
selon lequel, en pressant la seconde partie d'accouplement (350) contre la première partie d'accouplement (310), la portion d'arbre conique (321) de la première partie d'accouplement (310) est introduite dans le moyeu conique (362) de la seconde partie d'accouplement (350), formant ainsi un siège conique, et
selon lequel l'épaulement d'arbre (339) de la première partie d'accouplement (310) est inséré dans la seconde partie d'accouplement contre l'action d'une force de ressort jusqu'à ce que l'élément de blocage (352) engage l'épaulement d'arbre (339), si bien que la force de ressort sollicite le siège conique à l'état encliqueté.

18. Procédé selon l'une des revendications 16 ou 17,
selon lequel au moment de l'engagement l'élément de blocage (352) est déplacé perpendiculairement à un axe de rotation de l'accouplement d'arbre et ce mouvement est détecté au moyen d'un capteur de proximité.

19. Procédé selon l'une des revendications 16 à 18,
selon lequel, après avoir introduit l'accouplement d'arbre dans la station de changement (50) ou dans une autre station de changement, l'accouplement d'arbre est pivoté autour de son axe de rotation jusqu'à ce qu'une extrémité de l'élément de blocage (352) qui dépasse de la seconde partie d'accouplement soit en contact avec la butée (520).

20. Procédé selon l'une des revendications 16 à 19,
selon lequel, en défaisant la liaison d'encliquetage, l'épaulement d'arbre (339) est écarté de l'élément de blocage (352) au moyen d'un ressort (334).
